# EUROPEAN PATENT APPLICATION

(11) **EP 2 282 016 A2**
(43) Date of publication of application: **09.02.2011**
(21) Application number: 10251190.4
(22) Date of filing: 30.06.2010
(51) Int. Cl.: F01D 17/16, F01D 17/08, F02C 9/20

(54) **Turbofan temperature control with variable area nozzle**

(30) Priority: 01.07.2009 US 495960
(71) Applicant: United Technologies Corporation, Hartford, CT 06101 (US)
(72) Inventor: Winter, Michael, New Haven, CT 06515 (US)
(74) Representative: Tomlinson, Kerry John

(57) **Abstract**

A control system (40) for a turbofan (10) comprises a variable area nozzle (26) for regulating core flow (*Fc*) through the turbofan, an actuator (27), a temperature sensor (42), a flight controller (44) and a nozzle control (47). The actuator (27) is coupled to the variable area nozzle (26) to regulate the core flow by positioning the variable area nozzle. The temperature sensor (42) is positioned in the turbofan to sense a gas path temperature of the core flow (*Fc*). The flight controller (44) is connected to the turbofan to make a thrust demand based on a flight condition of the turbofan (10). The nozzle control (47) is connected to the flight controller (44) and the actuator for directing the actuator based on the gas path temperature and the flight condition, such that the gas path temperature is controlled by adjusting the variable area nozzle (26) to regulate the core flow (*Fc*) while the turbofan meets the thrust demand.

## Description

### BACKGROUND

This invention relates generally to gas turbine engines, and specifically to turbofan engines with aviation applications. In particular, the invention concerns core flow temperature control for turbofan engines having a variable area fan nozzle, including high-bypass turbofans configured for fixed-wing aircraft.

Gas turbine engines provide efficient, reliable power sources for a wide range of aviation applications. In the particular area of fixed-wing aircraft, engine design has evolved substantially from the original turbojet concept to include a wide range of highly efficient and responsive turbofan designs.

Turbofan engines are built around an engine core formed by a compressor, a combustor and a turbine, which are arranged in flow series between an upstream inlet and a downstream exhaust. The turbine core is coupled to a fan, which accelerates flow from the inlet through a bypass duct arranged around the core. The core airflow is directed through the compressor, where it is compressed and then mixed with fuel in the combustor. The compressed air-fuel mixture is ignited to produce hot combustion gas, which drives the turbine and is exhausted downstream.

In two-spool turbofan engines, the turbine is divided into a high pressure (HPT) section and a low-pressure (LPT) section. The HPT section is coupled to the compressor via an HPT shaft, forming the high-pressure spool, and the LPT section is coupled to the fan via an LPT shaft, forming the low-pressure spool or fan spool. The HPT, LPT and compressor sections are each further divided into a number of stages, or alternating rows of blades and vanes. Individual blades and vanes are shaped as airfoils, and configured to perform a number of functions including accelerating and turning the working fluid flow, compressing air in the compressor, and extracting energy from expanding combustion gas in the turbine.

The HPT and LPT (fan) spools are usually coaxially mounted, and rotate independently. In advanced designs a geared fan drive is used to provide independent control of the LPT/fan speed ratio, in order to increase engine efficiency, reduce noise, and improve turbofan performance. Alternatively, single-spool (including single-spool turboprop) designs are also employed, as well as more complex three-spool configurations.

Commercial aircraft typically employ high-bypass turbofans, in which most of the thrust is generated from bypass flow. Low-bypass turbofans provide greater specific thrust but also tend to be louder and less fuel efficient, and are more commonly used for high-performance applications such as supersonic aircraft. Both high bypass and low bypass designs are also configurable to power environmental control systems and accessory functions, including pneumatics, hydraulics and electrical power generators.

In some turbofans, a fan variable area nozzle (FVAN or VAN) is employed. The VAN is typically installed at the aft end of the bypass duct, in order to regulate flow by restricting the nozzle area. In low fan pressure ratio (FPR) designs, for example, the VAN is deployed to address particular conditions such as fan flutter during idle approach or descent.

As in any aspect of turbofan engine design, VAN deployment involves a tradeoff between increased pressure ratio, which tends to improve efficiency and performance, and higher combustion temperatures, which tend to increase wear and decrease service life. This is particularly true during high-demand operations, including takeoff and climb, and for high-temperature core flow along the HPT sections immediately downstream of the combustor.

### SUMMARY

This invention concerns a control system for a turbofan, a turbofan engine including the system, and a method of using the system to control the turbofan. The control system comprises a variable area nozzle (VAN) positioned to regulate bypass and core flow through the turbofan, an actuator coupled to the VAN, a temperature sensor positioned in the core flow, a flight controller for making thrust demands, and a nozzle control for directing the actuator.

The actuator regulates the core flow by adjusting the VAN, and the temperature sensor measures the core flow temperature as regulated by the VAN. The flight controller determines flight conditions of the turbofan, and makes thrust demands based thereon. The nozzle control directs the actuator to regulate the core flow based on the flight conditions and the temperature. Thus the system controls the core gas path temperature by adjusting the VAN while the turbofan meets the thrust demand under the given flight conditions.

### BRIEF DESCRIPTION OF THE DRAWINGS

FIG. 1 is a cross-sectional view of a turbofan engine having a variable area nozzle for regulating core and bypass flow.

FIG. 2 is a schematic view of a control system for the turbofan engine of FIG. 1.

FIG. 3 is a flow chart illustrating a method for using the control system in FIG. 2.

### DETAILED DESCRIPTION

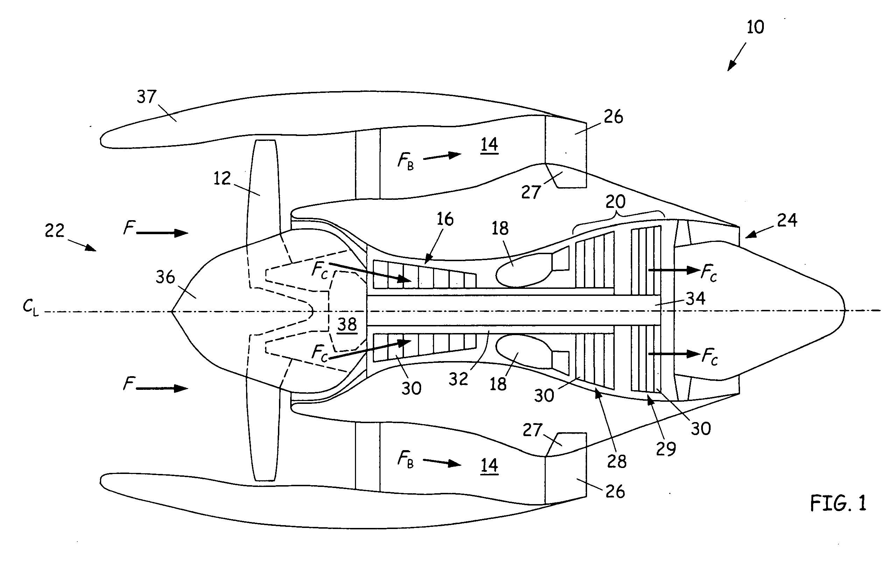

FIG. 1 is a cross-sectional view of turbine engine 10, in a turbofan embodiment. Turbofan engine 10 comprises fan 12 with bypass duct 14 oriented about a turbine core comprising compressor 16, combustor(s) 18 and turbine 20, which are arranged in flow series with upstream inlet 22 and downstream.exhaust 24.

Variable area nozzle 26 is positioned in bypass duct 14 in order to regulate bypass flow *F*_{B} with respect to core flow *F*_{C}, in response to adjustment by actuator(s) 27. This allows turbofan 10 to control or limit the temperature of core flow *F*_{C}, including during times of peak thrust demand as described below.

Turbine 20 comprises high-pressure (HPT) section 28 and low-pressure (LPT) section 29. Compressor 16 and turbine sections 28 and 29 each comprise a number of alternating blade and vane airfoils 30. HPT section 28 of turbine 20 is coupled to compressor 16 via HPT shaft 32, forming the high pressure spool. LPT section 29 is coupled to fan 12 via LPT shaft 34, forming the low pressure or fan spool. LPT shaft 34 is coaxially mounted within HPT shaft 32, about turbine axis (centerline) *C*_{L}, such that the HPT and LPT spools rotate independently.

Fan 12 is typically mounted to a fan disk or other rotating member, which is driven by LPT shaft 34. As shown in FIG. 1, for example, fan 12 is forward-mounted in engine cowling 37, upstream of bypass duct 14 and compressor 16, with spinner 36 covering the fan disk to improve aerodynamic performance. Alternatively, fan 12 is aft-mounted in a downstream location, and the coupling configuration varies. Further, while FIG. 1 illustrates a particular two-spool high-bypass turbofan embodiment of turbine engine 10, this example is merely illustrative. In other embodiments turbine engine 10 is configured either as a low-bypass turbofan or a high-bypass turbofan, as described above, and the number of spools and fan position vary.

In the particular embodiment of FIG. 1, fan 12 is coupled to LPT shaft 34 via a planetary gear or other geared fan drive mechanism 38 (shown in dashed lines), which provides independent speed control. More specifically, fan gear 38 allows turbofan 10 to control the rotational speed of fan 12 independently of the high and low spool speeds (that is, independently of HPT shaft 32 and LPT shaft 34), increasing the operational control range for improved engine response and efficiency.

In operation of turbofan 10, airflow *F* enters via inlet 22 and divides into bypass flow *F*_{B} and core flow *F*_{C} downstream of fan 12. Bypass flow *F*_{B} passes through bypass duct 14, generating thrust, and core flow *F*_{C} passes along the gas path through compressor 16, combustor(s) 18 and turbine 20.

Compressor 16 compresses incoming air for combustor(s) 18, where it is mixed with fuel and ignited to produce hot combustion gas. The combustion gas exits combustor(s) 18 to enter HPT section 28 of turbine 20, driving HPT shaft 32 and compressor 16. Partially expanded combustion gas transitions from HPT section 28 to LPT section 29, driving fan 12 via LPT shaft 34 and, in some embodiments, fan gear 38. Exhaust gas exits turbofan 10 via exhaust 24.

Variable area nozzle (VAN) 26 comprises a number of control surfaces positioned along bypass flow *F*_{B}. Actuator 27 is coupled to VAN 26 in order to regulate bypass flow *F*_{B}, by adjusting the position of VAN 26. In particular, VAN 26 modifies the bypass ratio (BPR), which is the ratio of bypass flow *F*_{B} to core flow *F*_{C}. The core and bypass flows are coupled in the region of fan 12, such that VAN 26 also regulates core flow *F*_{B}.

Fan gear mechanism 38 allows turbine engine 10 to further regulate one or both of bypass flow *F*_{B} and core flow *F*_{C} by independently adjusting the speed of fan 12. In one such embodiment, for example, turbofan 10 utilizes fan gear 38 to increase efficiency and reduce engine noise (including noise from fan 12) by synchronizing airspeed and turbofan exhaust velocity during takeoff, climb, or landing.

In low bypass turbofans configured for supersonic flight, the bypass ratio can be as low as 50% or less (BPR ≤ 0.50). Most modern turbofans, however, operate at a minimum bypass ratio of 80% or more (BPR ≥ 0.80), in order to achieve high efficiency and low specific fuel consumption. In commercial aircraft engines, for example, the BPR typically exceeds five (BPR > 5.0), and can reach ten or more (BPR ≥ 10.0) in large airliner and transport applications.

The thermodynamic efficiency of turbofan 10 is strongly tied to the overall pressure ratio, as defined between the compressed air pressure entering combustor(s) 18 and the delivery pressure at intake 22. In general, higher pressure ratios offer increased efficiency and improved performance, including greater specific thrust, but also result in higher peak gas path temperatures, particularly downstream of combustors(s) 18, including HPT section 28 (e.g., the T4 stage). Higher temperatures increase wear on turbofan components such as airfoils 30, reducing service life.

Turbofan 10 utilizes VAN 26 and actuator 27 to control peak gas path temperatures by regulating core and bypass flows *F*_{C} and *F*_{B} through turbofan 10, reducing wear and improving reliability while maintaining thrust performance and efficiency. In particular, when actuator 27 closes VAN 26 to reduce nozzle area and restrict flow duct 14, bypass flow *F*_{B} decreases with respect to core flow *F*_{C}. This lowers the BPR and increases the mass flow rate of core flow *F*_{C} through compressor 16, combustor(s) 18 and turbine 20. When actuator 27 opens VAN 26, the nozzle area increases and bypass flow *F*_{B} increases with respect to core flow *F*_{C}, raising the BPR and lowering the mass flow rate.

In typical engine designs, actuator 27 deploys VAN 26 in order to reduce fan flutter during idle approach or descent, as described above. These are low-thrust operations, for example with FPR ≤ 1.3 or FPR ≤ 1.5, depending on engine design and flight configuration. The highest gas path temperatures, on the other hand, are typically experienced during high-thrust takeoff and climb operations, when the FPR is higher (e.g., FPR > 1.5 or FPR > 2.0). As described immediately below, this allows VAN 26 to be deployed for core flow temperature control during high-demand takeoff and climb operations, without affecting flutter-related deployment during approach and descent.

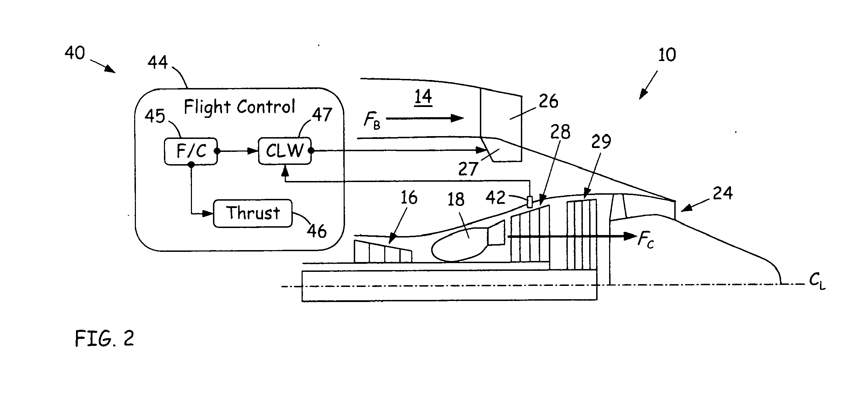

FIG. 2 is a schematic view of control system 40 for turbofan engine 10, with turbofan 10 shown in a partial aft-end view. Control system 40 comprises VAN 26 positioned along bypass duct 14, with actuator 27 coupled to VAN 26 as described above. In addition, control system 40 comprises temperature sensor 42 and flight controller 44.

Temperature sensor 42 comprises a temperature probe or sensor housing with a temperature-sensitive element positioned to measure the temperature of core flow *F*_{C}. Typical sensor elements include thermocouples, resistance-temperature devices (RTDs) and optical or infrared sensors, which generate a voltage or current signal representing gas path temperature *T*_{C}. Depending on embodiment, temperature sensor 42 also utilizes a range of preamplifier, signal processor, interface and other electronics components for converting the sensor signal into an analog or digital output, and for transmitting the output to flight controller 44.

As shown in FIG. 2, temperature sensor 42 typically extends through a seal in the turbine case or compressor housing, and is positioned to sense gas path temperature *T*_{C} at a particular location along core flow *F*_{C}. In this particular embodiment, for example, temperature sensor 42 extends through the turbine case to measure temperature proximate the T4 (fourth) stage of HPT section 28, where airfoils 30 and the other components of turbofan 10 are susceptible to thermal damage due to peaking gas path temperatures. Alternatively, temperature sensor 42 is positioned proximate another stage of HPT section 28, or within LPT section 29 or compressor 16. In further embodiments, a number of temperature probes 42 are positioned in different locations within turbofan 10, in order to measure multiple gas path temperatures *T*_{C} along core flow *F*_{C}.

Flight controller 44 comprises flight condition module (F/C) 45, thrust control 46 and nozzle control law (CLW) 47. Note, however, that the specific arrangement of these elements in FIG. 2 is merely illustrative, in order to describe gas path temperature control along core flow *F*_{C}, and this arrangement is not intended to depict any particular physical configuration. Depending on embodiment, moreover, flight controller 44 typically comprises a number of additional flight, engine and navigational systems utilizing other control, sensor, and processor components located throughout turbofan engine 10, and in other regions of the aircraft.

Flight condition module 45 includes a combination of software and hardware components configured to determine and report flight conditions relevant to the operation of turbofan 10. In general, flight controller 44 includes a number of individual flight modules 45, which determine a range of different flight conditions based on a combination of pressure, temperature and spool speed measurements and additional data such as attitude and control surface positions. With particular respect to core flow temperature control by system 40, flight module 45 determines flight conditions including, but not limited to, altitude, airspeed, ground speed, ambient air pressure, outside air temperature, high and low spool speeds *N*₁ and *N*₂, additional spool speeds, the rotational speed of fan 12, and the deployment position of VAN 26 in bypass duct 14.

Thrust control 46 is configured to make a thrust demand on turbofan 10, or, depending on configuration, to generate a thrust request related to a thrust demand. The thrust requests and thrust demands are based on operator input from a throttle, autopilot or cockpit control system, and on one or more of the flight conditions reported by flight module(s) 45.

Nozzle control 47 comprises a control law (CLW) configured to direct actuator 27 to adjust the position of VAN 26 along bypass duct 14. The CLW directs actuator 27 based on the thrust demand, the flight conditions determined by flight module 45, and core flow gas path temperatures *T*_{C} as measured by temperature sensor 42. In particular, nozzle control 47 directs actuator 27 to adjust VAN 26 in order to regulate the BPR between bypass flow *F*_{B} and core flow *F*_{C}, to regulate the mass flow rate of flow *F*_{C} through the turbine core, and to control, limit or manage gas path temperatures *T*_{C}.

Control system 40 is utilized to control core flow temperature *T*_{C} during peak thrust cycles, including lifetime-limiting takeoff and climb cycles in which a substantial fraction, if not most, of overall engine wear occurs. In particular, system 40 deploys VAN 26 to limit peak gas path temperatures while maintaining thrust performance, and without compromising the normal operation of VAN 26 during low-demand (low FPR) operations. System 40 is also configurable to control additional parameters such as the fan and spool speeds, in order to increase the maximum thrust rating while continuing to maintain lower gas path temperatures, thus improving engine performance without increasing wear on lifetime-limited parts.

During takeoff and climb, thrust control 46 typically demands a peak thrust value ranging up to the maximum takeoff (MTO) or maximum climb (MCL) rating of turbofan engine 10. The actual thrust demand, however, depends on a number of factors including altitude, temperature, pressure, runway length, the elevation of surrounding terrain, and flight path limitations related to population, restricted airspaces, and other external considerations. Each of these factors also affects the operation of turbofan control system 40, as related to core flow temperature control.

In general, nozzle control 47 invokes an algorithm (i.e., a control law) to direct actuator 27 to close VAN 26 to a predetermined position during takeoff and climb cycles, reducing core flow temperatures by increasing the mass flow rate through compressor 16. During takeoff, for example, ambient (outside or ground) temperature is a consideration and the requested VAN position is typically based on a combination of core flow temperature *T*_{C} and the outside temperature, in order to maintain flow temperature *T*_{C} below an operational threshold. During climb operations, altitude (or outside air pressure) is a consideration and nozzle control 47 typically directs actuator 27 to open or close VAN 26 based on flow temperature *T*_{C} and the altitude, or based on a combination of flow temperature *T*_{C}, altitude, and ambient temperature.

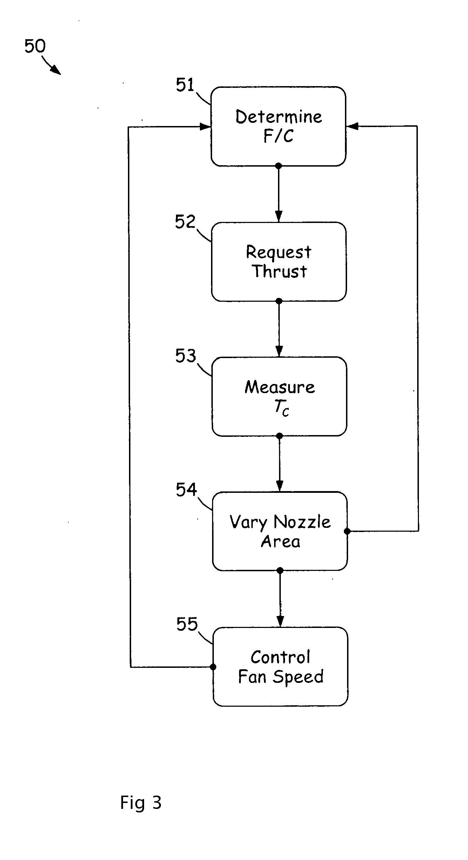

FIG. 3 is a flow chart illustrating control method 50 for a turbofan engine, for example using system 40 of FIG. 2 to control turbofan engine 10 of FIG. 1, above. Method 50 comprises determining a flight condition (step 51), requesting thrust (step 52), measuring a gas path temperature (step 53) and varying a fan nozzle area (step 54) to control the gas path temperature. In some embodiments, method 50 further comprises controlling a fan speed (step 55), in order to improve engine performance or reduce engine noise.

Determining a flight condition (step 51) is performed via a combination of hardware and software elements such as a flight control module or flight control system, which are configured to determine flight conditions including altitude, airspeed and various pressures and temperatures as described above. Depending on embodiment, determining a flight condition also comprises deriving a number of higher-level quantities such as climb rate, descent rate, turn rate and flight path information, which are based on a combination of flight conditions and additional data such as GPS, radar and navigational beacon signals.

Requesting thrust (step 52) comprises making a thrust demand on the turbofan engine, based on input from a throttle, cockpit control system, autopilot or other operator interface. The thrust demand also depends upon flight conditions including the temperature, pressure and altitude, which limit the maximum or peak thrust demand as described above.

Measuring a gas path temperature (step 53) comprises sensing a core flow temperature by positioning a temperature probe or temperature sensor along the gas path, and generating an output representing the temperature for use by the flight control system and nozzle control law. In some embodiments, the flow temperature is measured in a high pressure turbine section, in order to address peak gas path temperatures proximate lifetime-limiting wear components downstream of the combustor. In other embodiments, the flow temperature is measured in a low pressure turbine section or a compressor, or at multiple locations along the core gas path.

Varying a fan nozzle area (step 55) comprises directing the nozzle actuator to adjust a control surface positioned in the bypass flow. The control surface either restricts (closes) or increases (opens) the bypass flow area, in order to regulate the bypass ratio and mass flow rate through the engine core. This allows method system 40 to limit or reduce gas path temperatures based on the thrust demand, the measured flow temperature, and one or more flight conditions such as altitude and temperature.

During peak demand takeoff and climb operations, varying the fan nozzle area typically comprises directing the actuator to decrease the nozzle area by closing the VAN, reducing the bypass ratio and increasing the core flow as described above. The particular desired VAN position, however, depends not only on the thrust demand but also the measured gas path temperature, as well as various flight conditions including ambient temperature, pressure, altitude, and airspeed. As these conditions change along the flight path, moreover, the VAN position is sometimes continuously varied in order to regulate more or less core flow, or to increase or decrease the bypass ratio, or both, in order to improve efficiency, reduce fan or engine noise, or achieve a more beneficial flight trajectory.

When applied to turbofans with a gear-driven fan, temperature control method 50 typically comprises controlling fan speed (step 55). Fan speed control is achieved via a planetary gear or other gear mechanism, as described above, which allows method 50 to regulate the fan speed independently of high and low pressure spool speeds *N*₁ and *N*₂, or other spool speeds. Typically, fan speed control is performed to increase efficiency or reduce noise, or both, for example by gearing the fan speed to synchronize airspeed and exhaust velocity. Fan speed control also provides additional means for regulating the core flow, because the division between core and bypass flow depends not only on nozzle area (VAN position) but also the fan pressure ratio (FPR), which in turn is related to fan speed.

By utilizing an existing VAN system to control gas path temperatures, turbofan control system 40 of FIG. 2 and method 50 of FIG. 3 maintain thrust performance and increase engine life while reducing the need for additional costly high-temperature components and coating materials. Peak temperature relief also enables higher pressure ratios and efficiency, increasing fuel economy during high-demand takeoff and climb operations. As opposed to reducing or de-rating maximum takeoff (MTO) and maximum climb (MCL) recommendations, moreover, system 40 and method 50 offer an alternative that increases service life while maintaining or improving peak thrust performance.

While this invention has been described with reference to particular embodiments, the terminology used is for the purposes of description, not limitation. Workers skilled in the art will recognize that changes may be made in form and detail without departing from the scope of the invention defined by the claims, including the substitution of various equivalents for particular invention elements and adaptation of the invention's teachings to different materials, situations and circumstances. Thus the invention is not limited to the particular embodiments disclosed herein, but encompasses all embodiments falling within the scope of the appended claims.

## Claims

1. A control system (40) for a turbofan (10), the control system comprising:
a variable area nozzle (26) for regulating core flow (*Fc*) through the turbofan;
an actuator (27) coupled to the variable area nozzle for regulating the core flow by positioning the variable area nozzle;
a temperature sensor (42) positioned inside the turbofan for sensing a gas path temperature along the core flow;
a flight controller (44) connected to the turbofan for making a thrust demand based on a flight condition of the turbofan; and
a nozzle control (47) connected to the flight controller and the actuator, wherein the nozzle control directs the actuator to regulate the core flow (*Fc*) based on the flight condition and the gas path temperature, such that the gas path temperature is controlled while the turbofan meets the thrust demand.

2. The control system (40) of claim 1, wherein the flight controller (44) makes the thrust demand at a fan pressure ratio of greater than 1.5 and the nozzle control (47) directs the actuator (27) to increase the core flow (*Fc*) while the turbofan (10) meets the thrust demand.

3. The control system (40) of claim 2, wherein the actuator (27) is coupled to the variable area nozzle to (26) increase the core flow by closing the variable area nozzle.

4. The control system (40) of claim 3, wherein the temperature sensor (42) is positioned in a high pressure turbine section (28) of the turbofan (10), and wherein the actuator (27) closes the variable area nozzle (26) such that the gas path temperature is reduced in the high pressure turbine section, as compared to a gas path temperature in the high pressure turbine section when the variable area nozzle is open.

5. The control system (40) of claim 3, wherein the flight condition comprises airspeed, and wherein the flight controller (44) further controls a fan gear mechanism (38) based on the airspeed, such that fan noise is reduced while the turbofan meets the thrust demand.

6. The control system (40) of claim 1, wherein the flight controller (44) makes a takeoff thrust demand, and wherein the nozzle control (47) directs the actuator (27) to close the variable area nozzle while the turbofan (10) meets the takeoff thrust demand.

7. The control system (40) of claim 6, wherein the flight condition comprises ambient temperature, and wherein the control system maintains the gas path temperature below a threshold value by adjusting the variable area nozzle (26) based on the ambient temperature.

8. The control system (40) of claim 1, wherein the flight controller (44) makes a climb thrust demand, and wherein the nozzle control (47) directs the actuator to close the variable area nozzle while the turbofan (10) meets the climb thrust demand.

9. The control system (40) of claim 8, wherein the flight condition comprises altitude, and wherein the control system maintains the gas path temperature below a threshold value by adjusting the variable area nozzle (26) based on the altitude.

10. A turbofan engine (10) comprising:
a fan (12);
a turbine core coupled to the fan;
a bypass duct (14) positioned outside the turbine core; and
a control system (40) as claimed in any preceding claim;
the variable area nozzle (26) being positioned in the bypass duct, and the actuator (27) regulating mass flow through the turbine core with respect to flow through the bypass duct.

11. The turbofan engine (10) of claim 10, wherein the temperature probe (42) is positioned in a high pressure turbine section (28) of the turbine core and the flight controller (44) demands a peak thrust, such that the gas path temperature is limited in the high pressure turbine section while the turbofan engine delivers the peak thrust.

12. The turbofan engine (10) of claim 11, further comprising a gear mechanism (38) for changing a rotational speed of the fan (12) with respect to the turbine core, such that the flow through the bypass duct (14) is regulated as a function of airspeed in order to reduce fan noise while the turbofan delivers the peak thrust.

13. A control method (50) for a turbofan (10), the method comprising:
determining a flight condition (step 51) for the turbofan;
requesting thrust (step 52) from the turbofan, based on the flight condition;
measuring a gas path temperature (step 53) along a core flow inside the turbofan;
varying a fan nozzle area (step 55) to regulate the core flow; and
controlling the gas path temperature by regulating the core flow based on the gas path temperature and the flight condition, such that the gas path temperature is limited while the turbofan delivers the thrust.

14. The control method (50) of claim 13, wherein requesting thrust (step 52) comprises requesting maximum thrust from the turbofan, and wherein varying a fan nozzle area (step 53) comprises reducing the fan nozzle area while the turbofan delivers the maximum thrust.

15. The control method (50) of claim 13 or 14, wherein determining a flight condition (step 51) comprises determining an ambient temperature and an altitude for the turbofan (10), and wherein the gas path temperature is limited below a threshold value by regulating the core flow (*Fc*) based on the ambient temperature and the altitude; and preferably further comprising regulating a fan speed in order to reduce turbofan noise while the turbofan delivers the maximum thrust at the altitude.
